# EUROPÄISCHE PATENTSCHRIFT

(11) **EP 1 361 796 B1**
(45) Veröffentlichungstag und Bekanntmachung des Hinweises auf die Patenterteilung: **23.02.2011**
(21) Anmeldenummer: 01965212.2
(22) Anmeldetag: 23.08.2001
(51) Int. Cl.: A21D 8/04, A21D 10/00, A21D 13/06

(54) **STARTERZUBEREITUNG FÜR DIE HERSTELLUNG VON BROT UND BACKWAREN**
STARTER PREPARATION FOR PRODUCING BREAD AND BAKERY PRODUCTS
PREPARATION DE LEVAIN POUR LA FABRICATION DE PAINS ET DE PRODUITS DE BOULANGERIE

(30) Priorität: 16.02.2001 DE 10107730
(43) Veröffentlichungstag der Anmeldung: 19.11.2003
(73) Patentinhaber: Piemonte Import Warenhandelsgesellschaft Mbh, 79199 Kirchzarten (DE)
(72) Erfinder: SIKKEN, Dirk, 28203 Bremen (DE); LÖSCHE, Klaus, 27580 Bremerhaven (DE)
(74) Vertreter: Miller, Andreas
(86) Internationale Anmeldenummer: PCT/EP2001/009767
(87) Internationale Veröffentlichungsnummer: WO 2002/065842

(56) Entgegenhaltungen:
- WO-A-96/13981
- DE-A- 3 535 412
- DE-A- 19 819 475
- US-A- 4 140 800
- US-A- 4 897 350
- US-A- 6 007 850
- US-A- 6 066 343

## Beschreibung

Der Einsatz von Milchsäurebakterien im Bereich Brot und Backwaren ist im Kern beschränkt auf die Herstellung von Sauerteigen in Form eines Vorteiges zur Herstellung von Roggengebäcken bzw. zur Herstellung von roggenhaltigen Gebäcken. Seit einiger Zeit wird in eingeschränktem Umfang auch Weizen versäuert und dieser Weizensauerteig als Vorteig zur Herstellung von Weizengebäck eingesetzt. Andere Getreidearten wie beispielsweise Reis sind noch weniger einer Versäuerung zugänglich, da außer bei der Verwendung von Roggen der erforderliche Säuregrad nur unzureichend oder gar nicht erreicht werden kann.

In diesem Zusammenhang werden Sauerteige mit Milchsäurebakterien, aber auch anderen Mikroorganismen (z. B. Hefen) hergestellt und normalerweise direkt verarbeitet. Es werden aber auch auf diese Weise hergestellte Sauerteige anschließend mittels verschiedenster Verfahren getrocknet, und zwar derart, dass daraus einerseits vitale Trockenprodukte entstehen, die wiederum zur Herstellung neuer Sauerteigbackmischung dienen können, und andererseits auch devitale Trockenprodukte zugänglich sind, die durch die "Devitalisierung" im Wesentlichen "nur" eine mehr oder weniger ausgeprägte Ansäuerung und Aromatisierung eines Teiges zum Ziel haben. Auch werden Mischkulturen hergestellt (Mischung aus Milchsäurebakterien und Hefen), die auf komplexen (preiswerten, aber wenig definierten und mit Fremdkeimen behafteten) Substraten herangezogen werden und als halbfeuchte Produkte mit einer Keimzahl von kleiner als 1.10<8>/g Material vertrieben werden.

Schließlich werden seit einiger Zeit auch spezielle Starter in gefriergetrockneter Form angeboten. Im Wesentlichen werden summarisch im Falle der Milchsäurebakterien sowohl heterofermentative als auch homofermentative Vergärer verwendet.

DE-A-19819475 offenbart eine trockene Mikroorganismenkultur, enthaltend wenigstens eine Mikroorganismenspezie, u.a. Laktobacillus Fermentum, in geträgerter Form. Dabei ist die Kultur in Form von Partikeln mit einer Größe von wenigstens 0,1 mm beschrieben. Auch ist die Verwendung einer derartigen Mikroorganismenkultur als Starterkultur für Nahrungs- und Futtermitteln, z.B. Sauerteig genannt.

Die erfindungsgemäße Mikroorganismenkultur wird dagegen auf neutralem getreideunspezifischem Nährboden gewonnen und bildet als Starterkultur dann ein Trockengemisch aus einem Lyophilisat von Milchsaurebakterien mit besonders strukturierten Getreidemahlprodukten (Korngröße etc.). Die Produkte gem. DE-A-19819475 sind hingegen speziell durch Kompaktieren oder Tablettieren "verdichtet" (vgl. Anspruch 1). Insofern ist schon rein sachlich keine Überschneidung mit der vorliegenden Erfindung gegeben. Dass es auf eine trockene Vormischung bei der späteren Verarbeitung hier nicht ankommt, ist auch daraus ersichtlich, dass zur Verarbeitung des "Pulverkonzentrats" auch ein Nass-Granulationsschritt vorgesehen ist (Seite 7, Zeilen 50-52).

Der Fachmann wird folglich in Kenntnis dieses Verfahrens weder die Vorteile der vorliegenden Erfindung erkennen, noch deren Merkmale realisieren können. Die neue Lehre ist in ihrer konkreten Form daher im Hinblick auf DE-A-19819475 neu und erfinderisch. US-A-4897350 beschreibt eine Sauerteigstarterzubereitung zur Herstellung von Brot bestehend aus einer lyophilisierten Milchsäurebakteriumkultur (Laktobacillus Fermentum), Hefe und einem Getreideprodukt (Weizen).

Das Beispiel 7 von US-A-4897350 betrifft eine Teigmischung (dough mix) aus Weizenmehl, Wasser und einem verbesserten Lactobacillus-Starter mit Lactobacillus fermentum ATCG 3910. Ein weiterer Zusatz ist Hefe. Die erfinderische Aufgabe besteht hier darin, durch Auswahl eines bestimmten Lactobacillusstammes möglichst viel Lysin bei der Fermentierung zu erhalten. Eine Vorbedingungen hierfür ist, wie der Fachmann weiß, eine hohe extrazelluläre proteolytische Aktivität, die beim Verfahren der vorliegenden Erfindung absolut unerwünscht ist, weil hierdurch der Kleber im später zubereiteten Teig erheblich geschädigt, und die Konsistenz dieses Teigs negativ beeinflusst wird. Die erfindungsgemäße Lehre wird demnach durch US-A-4897350 weder vorweggenommen noch dem Fachmann nahegelegt, insbesondere da auch die vorhergehende Trockenmischung von Starter und Teiggrundlage nicht beschrieben oder empfohlen wird, sondern diese Mischung mit dem eigentlichen Starter in US-A-4897350 unter Zugabe von Wasser stattfindet (vgl. Spalte 10, Zeilen 19 bis 43). Da die Vorteile der vorliegenden Erfindung vom Fachmann folglich US-A-489735 nicht entnommen werden können, berührt sie auch die Neuheit und erfinderische Tätigkeit nicht, insbesondere da sie auf eine ganz andere Problemlösung gerichtet ist, nämlich mittels Lysin den Aminosäuregehalt von Brot mit einem bestimmten Lactobacillus fermentum Stamm zu erhöhten.

US-A-6066343 offenbart einen. Vorteig zur Herstellung von Brot aus Weizenmehl, lyophilisiertem Laktobacillus fermentum und weiteren Hilfs- und Wirkstoffen.

Es ist offensichtlich, dass dieser Stand der Technik nichts mit der vorliegenden Erfindung zu tun hat. Beispiele und Tabellen von US-A-6066343 betreffen Vorteige oder Sauerteige, jedoch keinen Starter nach der Erfindung. Im übrigen gilt natürlich auch hier das bei US-A-4897350 Gesagte zur absolut unerwünschten Lysinproduktion.

Auch US-A-6007850 enthält ein Verfahren zur Herstellung einer lyophilisierten Teigstarterzubereitung aus Bakteriumkultur (Laktobacillus, Hefe, einem Getreideprodukt (z.B. Weizen, Gerste, Roggen) und Enzymen.

Nach Anspruch 11 kann das Fermentationsprodukt auch getrocknet werden. In dieser Patentschrift ist aber nichts beschrieben, was die erfindungsgemäße Starterzubereitung neuheitsschädlich vorwegnehmen könnte. Die Problemlösung des Patentes ist weit entfernt von den Merkmalen der vorliegenden Erfindung. US-A-4140800 offenbart ein Verfahren zur Herstellung einer lyophilisierten Sauerteigstarterzubereitung aus Laktobacillus SanFrancisco, Mehl, Wasser und Stabilisator (z.B. Maltose, Laktose oder Sucrose).

Hier ist die Beurteilung ähnlich wie bei DE-A-19819475, denn es wird zunächst eine Suspension von Mehl, Wasser und Salz inokuliert, stabilisiert und letztlich getrocknet. Eine trockene Mischung einer Starterzubereitung mit einem strukturierten Getreidemahlprodukt ist weder beschrieben noch in den Beispielen vorgesehen oder gar beschrieben Ferner offenbart WO-A-9613981 eine Starterzubereitung zur Herstellung von Brot und Backwaren enthaltend eine lyophilisierte Milchsäurebakterienkultur (z.B. Laktobazillus Plantarum und / oder Laktobacillus brevis) mit einem Träger (z.B. Stärke oder Maltodextrin) oder mit einer Backzutat (z.B. Hefe, Mehl oder Zucker). Es wird also ein neuer Backzusatz (bakery ingredient) beschrieben, bei welchem Getreidekeime, bevorzugt Weizenkeime, mit Milchsäurebakterien und gegebenenfalls Hefe fermentiert werden. Das Fermentationsgemisch kann auch Weizenmehl (also ein Getreideprodukt), Zucker und insbesondere Gluten, das gerade nicht erfindungsgemäß ist, enthalten.

Nach dem Obengesagten ist auch diese Entgegenhaltung gegenüber der vorliegenden Erfindung ganz offensichtlich weder für die Neuheit noch die erfinderische Tätigkeit relevant.

Alle genannten Produkte und Verfahren ermöglichen zwar die Herstellung von Sauerteigbackwaren, können aber nicht die hohen Anforderungen erfüllen, die vom Verwender (Bäcker, Backwarenhersteller) bzw. Verbraucher (Kunde, Endabnehmer) an das Endprodukt hinsichtlich einer gleichbleibend hervorragenden Qualität und Reproduzierbarkeit gestellt werden. Dies betrifft insbesondere geschmackliche Eigenschaften, Textur und Haltbarkeit der Endprodukte.

Aufgabe dieser Erfindung ist esnämlich, dem Backwarenproduzenten erfindungsgemäße Starterzubereitungen bereitzustellen, die
1. hochspezifische Milchsäurebakterien-Kulturen enthalten,
2. die einerseits definierte, backtechnisch erwünschte und neuartige Eigenschaften bezüglich der Produktion herkömmlicher Sauerteigbackwaren basierend auf Roggenmahlprodukten als auch Mahlprodukten anderer Getreidearten liefern,
3. die notwendige Sicherheit und Reproduzierbarkeit in der Produktion von Sauerteigbackwaren gewährleisten, verbunden mit einem hohen Bequemlichkeitseffekt in der Handhabung, wie z. B. Verwiegung, leichte Durchmischbarkeit mit der Grundmischung und/oder Lagerstabilität des Starters selbst bzw. der trocken angemischten Backmischungen,
4. eine hohe Qualifikation zur Selbstkonservierung eines Sauerteiges hervorgerufen durch die spezifischen Starter besitzen, und
5. dem Bäcker bzw. Backwarenproduzenten/Großbäckereien rationelle Produkte und Technologien zur Verfügung zu stellen, die auch völlig neue Backwarenprodukte einem konventionellen Bäckereibetrieb genauso wie einem Großbäckereibetrieb, aber auch Hausfrauen und Freizeitbäckern verfügbar machen.

Gegenstand der Erfindung ist daher eine Starterkulturzubereitung bestehend aus lyophilisierter Milchsäurebakterienkultur und einem Trägermaterial und gegebenenfalls weiteren, die Sauerteigbereitung und Qualität fördernde Hilfs- und Wirkstoffe.

Zur Herstellung der für die erfindungsgemäßen Starterkulturzubereitungen verwendbaren Lyophilisate von Milchsäurebakterien können alle physiologisch verträglichen Milchsäurebakterienstämme Verwendung finden, beispielhaft, aber auch als besonders bevorzugt sei genannt Lactobacillus fermentum. Die Milchsäurebakterien werden mit dem Fachmann durchaus bekannten klassischen biotechnologischen Verfahren fermentiert und durch eine Lyophilisation auf hochvitale Keimzahlen von 1.10<11>/g und darüber konzentriert und dadurch haltbargemacht. Die Fermentation kann auf den üblichen Substraten für die Kultivierung von Milchsäurebakterien erfolgen, die die notwendigen Energiequellen enthalten, wie z. B. für Kohlenstoff beispielsweise Dextrose oder Maltose, für Stickstoff und Phosphor beispielsweise Hefeautolysat etc.. Wesentlich für die Herstellung des hoch angereicherten Lyophilisats für die erfindungsgemäßen Starterzubereitungen ist es jedoch, dass die Fermentierung auf keinen Fall, wie im Stand der Technik beschrieben, auf der Basis eines Getreidemahlerzeugnisses stattfindet oder der Nährboden derartige Getreidemahlprodukte enthält, sondern auf definiert zusammengesetzten, getreideunspezifischen und somit neutralen Nährböden erfolgt und daher eine exakte und standardisierbare Starterkulturqualität zugänglich wird.

Derartige Nährsubstrate sind literaturbekannt, wie z. B. in US 3,891,773.

Es können durch geeignete Auswahl des Kultursubstrats daher auch Starterkulturen verwendet bzw. hergestellt werden, die beispielsweise koscher sind und damit bestimmten Essgewohnheiten und Vorschriften genügen, als auch diätetischen Anforderungen genügen, z. B. frei sind von Allergenen oder zäliakieauslösenden Inhaltsstoffen wie beispielsweise Weizengluten, Gerste-, Hafer- oder Roggenproteine.

Der Gehalt an vitalen Milchsäurebakterien im Lyophilisat für die erfindungsgemäße Starterzubereitung liegt bei Keimzahlen von 1.10<9>/g bis 1.10<13>/g, bevorzugt 1.10<10>/g bis 1.10<12>/g.

Diese somit als Reinkulturen erhaltenen lyophilisierten Starterkulturen werden erfindungsgemäß mittels Trockenvermischung auf trockene, keimarme Trägerssubstrate aus Getreidemahlerzeugnissen überführt, um einerseits keine wesentliche Kreuz- oder Fremdinfektion im Präparat zu bekommen und andererseits die Dosierbarkeit in der Bäckerei technisch leichter zu realisieren. Als Träger können daher prinzipiell alle für die Backwarenherstellung in Frage kommenden Mahlprodukte jeglicher Getreidesorten Verwendung finden. Wesentlich ist jedoch, dass durch die erfindungsgemäßen trockenen und fließfähigen bzw. rieselfähigen Starterzubereitungen die Vorbereitung und Teigbereitung zur Herstellung von Sauerteigbackwaren wesentlich erleichtern wird.

Überraschenderweise wurde gefunden, dass hier spezifische Dunste oder auch Griese und weniger die feiner partikulierten Mehle besonders günstige Eigenschaften zur Herstellung der Starterzubereitungen aufweisen. Durch Anwendung von beispielsweise Weizen-Dunst konnten einerseits vergleichsweise längere Lagerstabilitäten der Kulturen unter z. B. Kühlbedingungen festgestellt werden und anderseits wurden lang anhaltende Rieselfähigkeiten erhalten, die die o. g. unproblematische Handhabung sicherstellen.

Erfindungsgemäß kommen daher als Träger für die Starterzubereitungen Getreidemahlprodukte einer Korngröße im Bereich von 100 bis 400 mu m, bevorzugt 120 bis 300 mu m, besonders bevorzugt 150-200 mu m in Frage

Neben der Korngröße des Trägermaterials wurde als wesentliches Merkmal zur Ausführung der erfindungsgemäßen Lehre dessen Keimzahlbelastung mit Fremdkeimen ermittelt Nach den durchgeführten Untersuchungen sollte möglichst ein Trägermaterial mit einer maximalen Fremdkeimzahl im Bereich von unter 1.10<2>/g verwendet werden. Dies ist besonders zu beachten, da normale Mühlenprodukte eine durchschnittliche Keimbelastung von 1.10<6>/g aufweisen.

Die erfindungsgemäße Starterzubereitung wird zweckmäßigerweise in Hochleistungsmischern, die in der Lage sind, Kleinstmengen in pulverförmigen trockenen Materialien homogen zu verteilen, hergestellt. In der Regel werden hierzu Pflugscharmischer verwendet, in denen das Trägermaterial vorgelegt wird und das Lyophilisat in der gewünschten Menge zudosiert wird. Der Mischvorgang ist in der Regel nach ca 20 min abgeschlossen. Es wird soviel Bakterienlyophilisat zudosiert, dass die fertige Starterzubereitung einen Bakteriengehalt von 1. 10<8>/g bis 1.10<11 >/g, bevorzugt 1. 10<9>/g hat. Beispielsweise werden so 99 Gewichtsteile Träger mit einem Gewichtsteil Lyophilisat von 1 .10<11>/g zu einer Starterzubereitung von 1.10<9>/g vermischt.

Die Vorbehandlung der Dunste bzw. des Trägermaterials ist von untergeordneter Bedeutung. Es können beispielsweise sowohl thermisch behandelte und aufgeschlossene Dunste (oder Griese, respektive Mehle) Verwendung finden als auch nicht aufgeschlossene Getreideprodukte. Entscheidend ist erfindungsgemäß nur Keimarmut und Partikelgröße, es können nur entsprechend keimarme Trägerstoffe mit guter Partikelgrößenverteilung eingesetzt werden. Auch die Getreideart, aus welcher der Träger gewonnen wird, spielt überraschenderweise keine Rolle.

So können auch beispielsweise Getreidemahlerzeugnisse auch auf Reisbasis mit unerwartet hervorragendem Erfolg verwendet werden. Dies ist z. B. sehr wichtig zur Herstellung von Präparaten für Zöliakiekranke.

Die Versäuerung von Reiserzeugnissen oder der Mahlerzeugnisse anderer Getreidearten als Roggen oder Weizen ist bekanntlich sehr viel schwerer oder gar unmöglich mit den üblichen bekannten Verfahren.

Mit den herkömmlichen Verfahren werden z. B. bei Roggen-Sauerteigen Säuregrade von 12 erzielt, Weizen-Sauerteige erreichen nur noch einen Säuregrad im Bereich von 8-10. Reis-Sauerteige liegen in der Regel unter 4 -6. Ähnliche Verhältnisse findet man auch bei anderen Mahlerzeugnissen.

Weiterhin wurde im Zusammenhang mit der Definition der erfindungsgemäßen Starterzubereitungen überraschend gefunden, dass der Einsatz von Phytase in diesen Zubereitungen während einer Sauerteigbereitung mit Reismehl in der Lage ist, Säuregrade von über 6-8 zu liefern, so dass nunmehr auch derartiges Material mit dem erfindungsgemäßen Starter einer Versäuerung zugänglich gemacht werden kann und damit der Bäckerei schlechthin. Damit ist die erfindungsgemäße Starterzubereitung von erheblichem Einfluss auf die Entwicklung vollkommen neuer Backwaren auf Sauerteigbasis.

Die entsprechende Verwendung des erfindungsgemäßen Starters mit zusätzlichem Gehalt an Phytase in Roggen- bzw. Weizen-Sauerteigen liefert in verkürzter Gärungszeit die oben genannten Sauerteige in der erforderlichen Qualität. Unter vergleichbaren Vergärungszeiten wurden beim Einsatz eines Phytase enthaltende Starters etwas erhöhte Säuregrade in diesen Produkten festgestellt. Offensichtlich werden durch die Aktivität dieses Enzyms Mineralstoffe freigesetzt, die dann als eine Art "Aktivator" (in statu nascendi) im Sauerteig fungieren können. Die Bioverfügbarkeit der Mineralien ist also einerseits für die Starterkulturen von Interesse und es kann andererseits auch die ernährungsphysiologische Wertigkeit eines Backerzeugnisses anheben, weil die Spurenelemente und Mineralstoffe durch Hydrolyse des Chelat- Komplexes "Phytat" verfügbarer werden. Phytase wird zweckmäßigerweise in Mengen zwischen 10 und 400 ppm, bevorzugt 50 bis 200 ppm und ganz besonders bevorzugt mit 100 ppm bezogen auf die Backmischung eingesetzt. Eine erfindungsgemäße Starterzubereitung enthält beispielsweise 98 Gewichtsteile Trägermaterial, ein Gewichtsteil Bakterienlyophilisat und ein Gewichtsteil Phytase.

Mit dem erfindungsgemäßen Starter unter Verwendung von lyophilisierten Milchsäurebakterien, insbesondere Lactobacillus fermentum als heterofermentativer Spezies, gegebenenfalls in einer besonders bevorzugten Zubereitung mit Phytase, werden für die Sauerteigherstellung eine Reihe von essentiellen Vorteilen zugänglich:
1. In Roggen- und Weizen-Sauerteigen werden hohe Säuregrade in kurzer Zeit erzielt. Dabei sind weder Methionin noch andere "Booster" notwendig.
2. Das Verhältnis von Milchsäure zu Essigsäure beträgt deutlich mehr als 80 : 20 und liegt eher bei 75 : 25.
3. Die Brotfrischhaltung (Weichheit von Brot) wird durch Lactobacillus fermentum um mindestens einen Tag verlängert. Dieser Umstand erlaubt es, den Einsatz von Frischhaltemitteln wie Emulgatoren und/oder Hydrokolloiden deutlich zu senken oder diese sogar zu substituieren.
4. Die mikrobiologische Haltbarkeit eines Brotes, hergestellt aus einem Sauerteig mit Lactobacillus fermentum, kann um 1 bis 3 Tage verlängert werden.
5. Die "Selbstkonservierung" eines Sauerteiges (Weiterführung des Sauerteiges aus sich heraus) ist bei Lactobacillus fermentum deutlich höher im Vergleich zu handelsüblichen und anderen beschriebenen Kulturen. Während bekanntlich ein Sauerteig nach spätestens 7 Tagen "abfrisst", d. h. als verdorben eingestuft werden muss, so ist dieses im Falle von Lactobacillus fermentum erst nach 10 Tagen der Fall. Offenbar synthetisiert Lactobacillus fermentum antibiotisch wirksame Stoffe, die einerseits die Brothaltbarkeit verbessern und andererseits die Sauerteig-Pflege deutlich verbessern (Selbstkonservierung).
6. Die Bewertung von Aroma und Geschmack der Backerzeugnisse wird sowohl im Weizenals auch im Roggenbereich besser als bei herkömmlichen Startern festgestellt. Besonders augenfällig wird die hohe Aromablosyntheseleistung in Reis-Sauerteigen speziell von Lactobacillus fermentum. Die Aromablosyntheseleistung dieses Stammes ist demnach besonders ausgeprägt.
7. Lactobacillus fermentum erreicht seine optimalen Gärungseigenschaften oberhalb einer Sauerteigfermentationstemperatur von 30 DEG C.

In einer besonderen Ausführungsform kann Lactobacillus fermentum auch in einer direkten Teigführung insbesondere im Weizenbereich eingesetzt werden. Werden Weizenteige ohne Sauerteig hergestellt, so hat dies einerseits verfahrenstechnische Vorteile, andererseits werden jedoch auf diese Weise nur sehr aromaarme und geschmacklich arme Produkte erhalten, die außerdem in ihrer Struktur leicht geschwächt sind. Der Einsatz von Lactobacillus fermentum in der direkten Teigführung und bei höherer Einsatzmenge (doppelt im Vergleich zur Sauerteigherstellung) liefert selbst unter diesen Bedingungen deutlich bessere Qualitäten etwa bei Weißbrot. Sowohl das Aroma als auch der Geschmack und die Textur eines solchen Brotes sind nunmehr erheblich besser zu bewerten.

## Patentansprüche

1. Starterkulturzubereitung zur Herstellung von Brot und Backwaren auf Sauerteigbasis oder unter Verwendung von Sauerteig, enthaltend ein Kultursubstrat auf der Basis von Milchsäurebakterien und eine Trägersubstanz, sowie ggf. zusätzliche Hilfs- und Wirkstoffe, **dadurch gekennzeichnet, dass**
a) das Kultursubstrat auf neutralem und getreideunspezifischem Nährboden gewonnen wurde und aus einem Lyophilisat vitaler Milchsäurebakterien mit Keimzahlen von 1×10⁹/g bis 1×10¹³/g, bevorzugt 1×10¹⁰/g bis 1×10¹²/g besteht,
b) die Trägersubstanz ein eine trockene und fließ- bzw. rieselfähige Mischung mit dem Kultursubstrat ergebendes Getreidemahlprodukt ist, wobei dessen Keimzahl kleiner als 1×10²/g ist und die Partikelgröße 100 bis 400 µm beträgt und
c) gewünschtenfalls als Wirkstoff Phytase zugesetzt ist.

2. Starterzubereitung nach Anspruch 1, **dadurch gekennzeichnet, dass** der Milchsäurebakterienstamm Lactobacillus fermentum ist.

3. Starterzubereitung nach Anspruch 1 bis 2, **dadurch gekennzeichnet, dass** die Trägersubstanz eine Korngröße im Bereich von 120 bis 300 µm und bevorzugt 150 bis 200 µm liegt.

4. Starterzubereitung nach Anspruch 1 bis 3, **dadurch gekennzeichnet, dass** die Trägersubstanz ein Weizen-, Roggen-, Gersten- , Hafer-, Mais- oder Reismehlprodukt ist.

5. Starterzubereitung nach Anspruch 1 bis 4, **dadurch gekennzeichnet, dass** der gewünschtenfalls zugegebene Zusatz an Phytase 10 bis 400 ppm, bevorzugt 50 bis 200 ppm und besonders bevorzugt 100 ppm, bezogen auf eine fertige Backmischung beträgt.

6. Verfahren zur Herstellung eines Sauerteigs für Brot und Backwaren, **dadurch gekennzeichnet, dass** man das Kultursubstrat nach den Ansprüchen 1 bis 5 mit der Trägersubstanz nach den Ansprüchen 1-5 und den gegebenenfalls zuzugebenden Wirk- und Hilfsstoffen trocken und homogen vermischt und anschließend in an sich bekannter Weise mit dem Mehl eines Getreideproduktes und Wasser in an sich bekannter Weise zu einem Sauerteig verarbeitet.

7. Verwendung eines nach Anspruch 6 gewonnenen Sauerteigs zur Herstellung von glutenfreiem Brot und glutenfreien Backwaren, durch direkte oder indirekte Teigführung.

8. Glutenfreies Brot und glutenfreie Backwaren hergestellt nach Anspruch 6 und 7.

## Claims

1. Starter culture preparation for manufacturing bread and baked goods based on sourdough or use of sourdough, containing a culture substrate based on lactic acid bacteria and a carrier substance, and possibly additional processing or active substances, **characterised by**:
a) the culture substrate is produced from neutral and grain-unspecific nutrient media and consists of a lyophilisate vital lactic acid bacteria from 1×10⁹ to 1×10¹³/g, preferably 1×10¹⁰/g to 1×10¹²/g,
b) the carrier substance forms a dry and flowable or pourable mixture with the sourdough product resulting from the culture substrate, with bacterial count of 1×10²/g and particle size 100 to 400 µm and
c) if desired, phytase is used as active ingredient.

2. Starter preparation according to claim 1, **characterised in that** the bacterial strain is Lactobillus fermentum.

3. Starter preparation according to claims 1 and 2, **characterised by** a carrier substance with a grain size from 120 to 300 µm and preferably 150 to 200 µm.

4. Starter preparation according to claims 1 to 3, **characterised by** a carrier substance which is a wheat, rye, barley, oats, corn or rice meal product.

5. Starter preparation according to claims 1 to 4, **characterised by** the possible addition of phytase of 10 to 400 ppm, preferably 50 to 200 ppm especially preferable, 100 ppm, related to a finished baking mixture.

6. Process for manufacturing bread and baked goods, **characterised in that** the culture substrate according to claims 1 to 5 is mixed dry and homogeneously with the carrier substance according to claims 1 to 5 and the possibly added processing and active ingredients and then in a manner known per se, with meal of a grain product and water to form a sourdough.

7. Use of a sourdough obtained according to claim 6 for manufacture of gluten-free bread and gluten-free baked goods, by direct or indirect dough proving.

8. Gluten-free bread and gluten-free baked goods produced according to claims 6 and 7.

## Revendications

1. Préparation de culture initiale pour la fabrication de pain et de produits de boulangerie à base de levain ou sous utilisation de levain, contenant un substrat de culture culture sur la base de lactobacilliaceae et une substance support ainsi que, le cas échéant, des excipients et des substances actives additionnels, **caractérisée par le fait que**
a) le substrat de culture a été préparé sur un milieu nutritif neutre et non spécifique aux céréales et qu'il se compose d'un lyophilisat de lactobacilliaceae vitales avec des nombres de germes de 1 x 10⁹/g à 1 x 10¹³/g, de préférence 1 x 10¹⁰/g à 1 x 10¹²/g,
b) la substance support est un produit à base de farine de céréales donnant un mélange sec, fluide et coulant avec le substrat de culture, le nombre de germes étant inférieur à 1 x 10²/g et la taille de particule étant de 100 à 400 µm, et
c) la substance active phytase y est ajoutée si désiré.

2. Préparation initiale selon exigence 1, **caractérisée par le fait que** la souche de lactobacilliaceae est le lactobacillus fermentum.

3. Préparation initiale selon exigence 1 à 2, **caractérisée par le fait que** la substance support présente une granulation de l'ordre de 120 à 300 µm, et de préférence entre 150 et 200 µm.

4. Préparation initiale selon exigence 1 à 3, **caractérisée par le fait que** la substance support est un produit à base de farine de blé, seigle, orge, avoine, maïs ou riz.

5. Préparation initiale selon exigence 1 à 4, **caractérisée par le fait que** l'adjonction sur désir de phytase est de 10 à 400 ppm, de préférence de 50 à 200 ppm et de grande préférence de 100 ppm pour un mélange tout prêt de produit de boulangerie.

6. Procédé de fabrication d'un levain destiné au pain et aux produits de boulangerie, **caractérisé par le fait que** l'on mélange le substrat de culture selon les exigences 1 à 5 à la substance support selon les exigences 1-5 et les substances actives et excipients ajoutés le cas échéant pour obtenir un mélange sec et homogène, et que l'on traite ensuite ce substrat de la manière connue avec la farine d'un produit céréalier et avec de l'eau de la manière connue pour obtenir un levain.

7. Utilisation d'un levain préparé selon l'exigence 6 en vue de la fabrication de pain exempt de glutène et de produits de boulangerie exempts de glutène, ceci par une préparation de pâte directe ou indirecte.

8. Pain exempt de glutène et produits de boulangerie exempts de glutène selon exigences 6 et 7.
